# EUROPÄISCHE PATENTSCHRIFT

(11) **EP 0 406 872 B1**
(45) Veröffentlichungstag und Bekanntmachung des Hinweises auf die Patenterteilung: **11.01.1995**
(21) Anmeldenummer: 90112879.3
(22) Anmeldetag: 05.07.1990
(51) Int. Cl.: C01B 25/36, C01B 33/26

(54) **Verfahren zur Herstellung eines weitporigen kristallinen Molekularsiebes**
Method for the preparation of a large-pored crystalline molecular sieve
Procédé de préparation d'un tamis moléculaire cristallin à grands pores

(30) Priorität: 07.07.1989 DD 330566
(43) Veröffentlichungstag der Anmeldung: 09.01.1991
(73) Patentinhaber: VAW Aluminium AG, D-53117 Bonn (DE); LEUNA-WERKE AG, D-06236 Leuna (DE)
(72) Erfinder: Jahn, Elke, Dr., O-1190 Berlin (DE); Bülow, Martin, Prof. Dr., O-1156 Berlin (DE); Neissendorfer, Frank, O-1136 Berlin (DE); Fricke, Rolf, Dr., O-1136 Berlin (DE); Richter-Mendau, Jürgen,, O-1183 Berlin (DE); Becker, Karl, Dr., W-4607 Bad Kösen (DE); Kraak, Peter, Dr., O-7022 Leipzig (DE); Birke, Peter, Prof. Dr., O-4090 Halle-Neustadt (DE); Müller, Dirk,, O-1198 Berlin (DE); Thome, Roland, Dr., D-5300 Bonn 1 (DE); Tissler, Arno, Dr., D-5300 Bonn 1 (DE)
(74) Vertreter: Müller-Wolff, Thomas, Dipl.-Ing.

(56) Entgegenhaltungen:
- EP-A- 0 146 389
- WO-A-89/01912
- WO-A-89/05775

## Beschreibung

Die Erfindung betrifft ein Verfahren zur Herstellung eines kristallinen Alumophospat-Molekularsiebes sowie seiner Sihaltigen Modifikation mit mikroporöser, definierter Raumnetzstruktur und Porenöffnungen, deren Durchmesser mindestens 0,8 nm beträgt, durch hydrothermale Kristallisation eines gelartigen Reaktionsgemisches, das als Ausgangskomponenten mindestens eine Aluminiumverbindung, eine Phosphorverbindung, Wasser und eine strukturdirigierende Verbindung sowie zusätzlich eine Siliziumverbindung enthält bzw. enthalten kann und das nach der Kristallisation eine Struktur besitzt, die sich im Röntgenbeugungsdiagramm (Cu-K_{α}-Strahlung) durch mindestens folgende Reflexe ausweist

| 2 ϑ (Cu-K_{α}) | Intensität |
|---|---|
| 5,2 - 5,6 | s.st. (sehr stark) |
| 10,65 - 10,8 | s. (schwach) |
| 21,4 - 21,8 | s. |
| 21,65 - 22,0 | s. |
| 22,2 - 22,6 | s. |
| 23,6 - 23,7 | s. |
| 27,1 - 27,3 | s. |
| 28,7 - 29,1 | s. (schwach) |
| 30,0 - 30,5 | s. |
| 32,7 - 32,9 | s. |

Aus PCT/US88/02910, veröffentlicht als WO 89/01912, ist ein Verfahren zur Herstellung eines Alumophosphat-Molekularsiebes bekannt, bei dem unter Verwendung einer strukturdirigierenden Verbindung auf organischer Basis die Ausgangkomponenten bei Raumtemperatur gemischt und anschließend einer hydrothermalen Kristallisation bei Temperaturen zwischen 50°C und 200°C unterzogen werden. Laut Figur 2 der WO-Veröffentlichung sind mit dem bekannten Verfahren Porendurchmesser von 10,5 A (VPI-5) und 7,8 A (Zeolith X (Na)) erreichbar.

Die großen Poren des Molekularsiebs VPI-5, das eine Phase auf Aluminiumsphosphatbasis darstellt, werden durch 18-gliedrige Ringe begrenzt. Die gleiche Struktur wie VPI-5 soll das Silico-Alumophosphat-Molekularsieb MCM-9 (EP 0 146 389) aufweisen (E.G. Derouane et al., MCM-9 - A very large pore Silico-Alumophosphate-Molecular Sieve, in P.A. Jacobs and R.A. van Santen (Eds.), Zeolites in the Nineties, Elsevier, Amsterdam, 1989, p.119).

Ein Mangel der beiden in den letztgenannten Patentschriften angegebenen Verfahren zur Synthese der weitporigen Molekularsiebe besteht darin, daß sie keine Informationen darüber enthalten, in welchem Maße bestimmte Eigenschaften der Molekularsiebe durch Wahl der Ausgangsstoffe der Syntheseparameter variiert werden können. Das erschwert die Anwendung dieser Synthesevorschriften bei Anpassungsversuchen der Molsiebe an gewünschte Einsatzgebiete z.B. durch die Steuerung der Kristallgröße und -morphologie etwa durch Optimierung der Keimbildungsphase und Kristallisationsgeschwindigkeit.

Weiterhin ist die erfolgreiche Synthese der Molekularsiebe VPI-5 und MCM-9 entsprechend den Patentvorschriften an den Einsatz einer strukturdirigierenden organischen Substanz gebunden. Diese Forderung beeinträchtigt einerseits die Wirtschaftlichkeit des Verfahrens und andererseits enthalten dies Synthesevarianten umweltgefährdende Prozeßstufen, da als strukturdirigierende Verbindungen bevorzugt organische Amin- bzw. quarternäre Ammoniumverbindungen eingesetzt werden.

Aufgabe der vorliegenden Erfindung ist es, ein ökonomisch und ökologisch vorteilhaftes Verfahren zur Herstellung eines Alumophospat-Molekularsiebs bzw. seiner Silizium enthaltenden Modifikation mit definierter Struktur und Porenöffnung zu schaffen, deren Durchmesser mindestens 0,8 nm beträgt und bei dem auf die Verwendung von organischen strukturdirigierenden Verbindungen verzichtet werden kann.

Die Aufgabe wird durch die im Hauptanspruch angegebenen Merkmale gelöst. Als Siliziumverbindung eignen sich insbesondere Kieselgel, Kieselsol, pyrogene kieselsäure oder ein Siliziumalkoxylat vzw. Si(OC₂H₅)₄. Bevorzugte Aluminiumverbindungen sind Aluminiumoxidaquate, vzw. Pseudoböhmit oder Aluminiumisopropoxid.

Als Phosphorverbindungen werden mit Vorteil H₃PO₄, H₄P₂O₇, NH₄H₂PO₄ oder (NH₄)₂HPO₄ eingesetzt.

Für das Reaktionsgemisch geeignete molare Verhältnisse sind
SiO₂/Al₂O₃ = 0 bis 5
P₂O₅/Al₂O₃ = 0,8 bis 2,6
H₂O/Al₂O₃ = 30 bis 500
Das molare Verhältnis der strukturdirigierenden Verbindungen zu dem Al₂O₃-Anteil im Reaktionsgemisch liegt im Bereich 1 bis 5 und/oder 2 bis 30 Gew-% bezogen auf den eingesetzten Feststoffanteil.

Eine besonders bevorzugte Ausführungsform besteht im Zusatz einer kristallinen strukturdirigierend wirkenden Substanz, in deren Röntgenbeugungsdiagramm mindestens die oben aufgeführten Reflexe erkennbar sind.

### Ausführungsbeispiele

### Erfindungsbeispiel 1

Unter Rühren werden zu einer Mischung aus 65 g Wasser und 13,6 g Pseudoböhmit (25 Gew-% H₂O), 18 g Pyrophosphorsäure (100 % H₄P₂O₇) gegeben. Der gesamte Mischvorgang erfolgte unter Eiskühlung. In dieses Gemisch werden 10 g Di-n-propylamin eingerührt und danach das Gesamtgemisch unter Eiskühlung 7 Stunden gerührt.

Das resultierende Gel wird in einem Autoklaven unter Eigendruck bei 130°C für eine Dauer von 20 Stunden gehalten, das Reaktionsprodukt abfiltriert, gewaschen und der Filterkuchen bei 50°C getrocknet. Das Röntgenbeugungsdiagramm des Kristallisates zeigt folgende Reflexe:

| 2 ϑ (Cu-K_{α}) | Intensität |
|---|---|
| 5,2 - 5,6 | s.st. (sehr stark) |
| 10,65 - 10,8 | s. (schwach) |
| 21,4 - 21,8 | s. |
| 21,65 - 22,0 | s. |
| 22,2 - 22,6 | s. |
| 23,6 - 23,7 | s. |
| 27,1 - 27,3 | s. |
| 28,7 - 29,1 | s. (schwach) |
| 30,0 - 30,5 | s. |
| 32,7 - 32,9 | s. |

### Erfindungsbeispiel 2

27 g Pseudoböhmit (25 Gew-% H₂O) und 120 g eines Kieselsols (30 Gew-% SiO₂) werden unter Eiskühlung gemischt mit H₃PO₄ (85%-ig) und 10 g Di-n-propylamin unter intensivem Rühren.

Nach Zugabe des Di-n-propylamins wurde das Gesamtgemisch 12 Stunden bei einer Temperatur von 8 - 10°C gerührt.

Die Kristallisation erfolgte wie im Beispiel 1 beschrieben. Das Röntgenbeugungsdiagramm des Kristallisats zeigte folgende Reflexe:

| 2 ϑ (Cu-K_{α}) | Intensität |
|---|---|
| 5,2 - 5,6 | s.st. (sehr stark) |
| 10,65 - 10,8 | s. (schwach) |
| 21,4 - 21,8 | s. |
| 21,65 - 22,0 | s. |
| 22,2 - 22,6 | s. |
| 23,6 - 23,7 | s. |
| 27,1 - 27,3 | s. |
| 28,7 - 29,1 | s. (schwach) |
| 30,0 - 30,5 | s. |
| 32,7 - 32,9 | s. |

### Erfindungsbeispiel 3

Unter Rühren werden bei Eiskühlung 27 g Pseudoböhmit (25 Gew-% H₂O) und 120 g eines 6 Stunden bei einer Temperatur von 40°C vorbehandelten Kieselsols (30 Gew-% SiO₂) gemischt, und zu dieser Mischung bei einer Temperatur von 8 bis 10°C werden 74 g H₃PO₄ 85 %-ig) und 10 g des Kristallisats aus Beispiel 2 zugegeben. Die Gesamtmischung wird dann 12 Stunden bei Eiskühlung (4°C) gerührt und anschließend in einem Autoklaven unter Eigendruck bei einer Temperatur von 130°C für die Dauer von 30 Stunden gehalten.

Das Kristallisat wurde dann abfiltriert, gewaschen und der Filterkuchen bei einer Temperatur von 50°C getrocknet. Das Röntgenbeugungsdiagramm zeigt folgende Reflexe:

| 2 ϑ (Cu-K_{α}) | Intensität |
|---|---|
| 5,2 - 5,6 | s.st. (sehr stark) |
| 10,65 - 10,8 | s. (schwach) |
| 21,4 - 21,8 | s. |
| 21,65 - 22,0 | s. |
| 22,2 - 22,6 | s. |
| 23,6 - 23,7 | s. |
| 27,1 - 27,3 | s. |
| 28,7 - 29,1 | s. (schwach) |
| 30,0 - 30,5 | s. |
| 32,7 - 32,9 | s. |

### Erfindungsbeispiel 4

Die Herstellung erfolgte gemäß der im Beispiel 3 angegebenen Rezeptur. Als kristallisationsdirigierende Substanz wurde ein Gemisch von 5 g Di-n-propylamin und 5 g des Kristallisates aus Beispiel 2 zugegeben.

Das resultierende Röntgenbeugungsdiagramm war nahezu identisch mit dem aus Beispiel 3.

### Vergleichsbeispiel 1

Unter Rühren (bei Raumtemperatur) werden zu einer Mischung aus 65 g Wasser und 13,6 g Pseudoböhmit (25 Gew-% H₂O) 18 g Pyrophosporsäure (100 % H₄P₂O₇) gegeben. In dieses Gemisch werden 10 g Di-n-propylamin eingerührt.

Das resultierende Gel wird in einem Autoklaven unter Eigendruck bei 130°C für eine Dauer von 20 Stunden gehalten, das Reaktionsgemisch abfiltriert, gewaschen und der Filterkuchen bei 50°C getrocknet.

Im Röntgenbeugungs-diagramm erwies sich dieses Produkt als amorph.

### Vergleichsbeispiel 2

27g Pseudoböhmit (25 Gew.-% H₂O) und 120 g eines 6 Stunden bei einer Temperatur von 40°C vorbehandelten Kieselsols (30 Gew.-% SiO₂) werden gemischt und zu dieser Mischung bei Raumtemperatur 74 g H₃PO₄ (85 %-ig) und 10 g Di-n-propylamin unter intensivem Rühren zugesetzt.

Das resultierende Gel wir anschließend in einem Autoklaven unter Eigendruck bei einer Temperatur von 130°C für die Dauer von 30 Stunden gehalten. Das Reaktionsprodukt wurde anschließend filtriert, gewaschen und der Filterkuchen bei einer Temperatur von 50°C getrocknet.

Das Röntgenbeugungsdiagramm zeigt die Andeutung eines Reflexes im Winkelbereich 2 ϑ (Cu-K_{α}) von 5,2 bis 5,6.

## Patentansprüche

1. Verfahren zur Herstellung eines kristallinen Alumophospat-Molekularsiebes sowie seiner Si-haltigen Modifikation mit mikroporöser, definierter Raumnetzstruktur und Porenöffnungen, deren Durchmesser mindestens 0,8 nm beträgt, durch hydrothermale Kristallisation eines gelartigen Reaktionsgemisches, das als Ausgangskomponenten mindestens eine Aluminiumverbindung, eine Phosphorverbindung, Wasser und eine strukturdirigierende Verbindung sowie zusätzlich eine Siliziumverbindung enthält, bzw. enthalten kann und das nach der Kristallisation eine Struktur besitzt, die sich im Röntgenbeugungsdiagramm (Cu-K_{α}-Strahlung) durch mindestens folgende Reflexe ausweist
| 2 ϑ (Cu-K_{α}) | Intensität |
|---|---|
| 5,2 - 5,6 | s.st. (sehr stark) |
| 10,65 - 10,8 | s. (schwach) |
| 21,4 - 21,8 | s. |
| 21,65 - 22,0 | s. |
| 22,2 - 22,6 | s. |
| 23,6 - 23,7 | s. |
| 27,1 - 27,3 | s. |
| 28,7 - 29,1 | s. (schwach) |
| 30,0 - 30,5 | s. |
| 32,7 - 32,9 | s. |
dadurch gekennzeichnet,
daß das fertige gelartige Reaktionsgemisch auf die Dauer von 15 Minuten bis 24 Stunden auf Temperaturen unterhalb 5°C abgekühlt wird, bevor das Reaktionsgemisch in einem Druckgefäß der hydrothermalen Kristallisation unterworfen wird.

2. Verfahren nach Anspruch 1
dadurch gekennzeichnet,
daß als Siliziumverbindung Kieselgel, Kieselsol, pyrogene Kieselsäure oder ein Siliziumalkoxylat, vzw. Si(OC₂H₅)₄, eingesetzt wird.

3. Verfahren nach Anspruch 1,
dadurch gekennzeichnet,
daß als Aluminiumverbindung Pseudoböhmit oder Aluminiumisopropoxid oder ein anderes Aluminiumoxidaquat eingesetzt wird.

4. Verfahren nach Anspruch 1,
dadurch gekennzeichnet,
daß als Phosphorverbindung H₃PO₄, H₄P₂O₇, NH₄H₂PO₄ oder (NH₄)₂HPO₄ eingesetzt wird.

5. Verfahren nach Anspruch 1,
dadurch gekennzeichnet,
daß das molekulare SiO₂/Al₂O₃-Verhältnis im Reaktionsgemisch 0 bis 5 beträgt.

6. Verfahren nach Anspruch 1,
dadurch gekennzeichnet,
daß das molekulare P₂O₅/Al₂O₃-Verhältnis im Reaktionsgemisch 0,8 bis 2,6 beträgt.

7. Verfahren nach Anspruch 1,
dadurch gekennzeichnet,
daß das molekulare Verhältnis der strukturdirigierenden Verbindung zu dem Al₂O₃-Anteil im Reaktionsgemisch 1,0 bis 5,0 und/oder 2 bis 30 Gew.-% bezogen auf den eingesetzten Feststoffanteil enthält.

8. Verfahren nach Anspruch 1 bis 7,
dadurch gekennzeichnet,
daß die strukturdirigierende Substanz ein kristallines Produkt ist, daß im Röntgenbeugungsdiagramm mindestens die im Anspruch 1 aufgeführten Reflexe enthält.

9. Verfahren nach Anspruch 1 bis 7,
dadurch gekennzeichnet,
daß das molare H₂O/Al₂O₃-Verhältnis im Reaktionsgemisch 30 bis 500 beträgt.

## Claims

1. A process of producing a chrystalline alumophosphate molecular sieve and the Si-containing modification thereof, having a microporous, defined three-dimensional network structure and pore apertures whose diameter amounts to at least 0.8 mm, by means of hydrothermal crystallisation of a gel-like reaction mixture which, in the form of starting constituents, contains or may contain at least an aluminium compound, a phosphorous compound, water and a structure defining compound and, in addition, a silicon compound and which, after having crystallised, comprises a structure which, in the X-ray diffraction diagram (Cu-K_{α} -radiation) comprises at least the following reflexes:
| 2 ϑ (Cu-K_{α}) | Intensity |
|---|---|
| 5.2 - 5.6 | v.s. (very strong) |
| 10.65 - 10.8 | w. (weak) |
| 21.4 - 21.8 | w. |
| 21.65 - 22.0 | w. |
| 22.2 - 22.6 | w. |
| 23.6 - 23.7 | w. |
| 27.1 - 27.3 | w. |
| 28.7 - 29.1 | w. (weak) |
| 30.0 - 30.5 | w. |
| 32.7 - 32.9 | w. |
characterised in
that the finished gel-like reaction mixture is cooled to temperatures below 5°C for a period of 15 minutes to 24 hours before the reaction mixture is subjected to hydrothermal crystallisation in a pressure vessel.

2. A process according to claim 1,
characterised in
that the silicon compound used is either silica gel, silica sol, pyrogenic silicic acid or a silicon alcoxylate, preferably Si(OC₂H₅)₄.

3. A process according to claim 1,
characterised in
that the aluminium compound used is either pseudo böhmite or aluminium isopropoxide or any other aluminium oxide aquate.

4. A process according to claim 1,
characterised in
that the phosphorous compound used is either H₃PO₄, H₄P₂O₇, NH₄H₂PO₄ or (NH₄)₂HPO₄.

5. A process according to claim 1,
characterised in
that the molecular SiO₂/Al₂O₃ ratio in the reaction mixture amounts to 0 to 5.

6. A process according to claim 1,
characterised in
that the molecular P₂O₅/Al₂O₃ ratio in the reaction mixture amounts to 0.8 to 2.6.

7. A process according to claim 1,
characterised in
that the molecular ratio of the structure-defining compound relative to the Al₂O₃ percentage in the reaction mixture amounts to 1.0 to 5.0 and/or 2 to 30 weight% with reference to the percentage of solid matter used.

8. A process according to claims 1 to 7,
characterised in
that the structure-defining substance is a crystalline product which, in the X-ray diffraction diagram, at least comprises the reflexes as listed in claim 1.

9. A process according to claims 1 to 7,
characterized in
that the molar H₂O/Al₂O₃ ratio in the reaction mixture amounts to 30 to 500.

## Revendications

1. Procédé de préparation d'un tamis moléculaire de type aluminophosphate cristallin ainsi que de sa variante contenant du Si ayant une structure de réseau spatial microporeux bien défini et ayant des ouvertures de pores dont le diamètre vaut au moins 0,8 nm, par cristallisation hydrothermale d'un mélange réactionnel du genre gel, qui contient ou peut contenir comme composant préalable de départ au moins un composé de l'aluminium, un composé du phosphore, de l'eau et un composé à rôle de direction ou de gabarit de formation d'une structure ainsi que, en outre, un composé du silicium, et qui, après la cristallisation, possède une structure qui, dans un diagramme de diffraction des rayons X (rayonnement K_{α} de cuivre, Cu-K_{α}) présente au moins les raies suivantes de réflexion :
| **2 ϑ (Cu-K**_{**α**}**)** | **Intensité** |
|---|---|
| 5,2 - 5,6 | t.i. (très intense) |
| 10,65 - 10,8 | f (faible) |
| 21,4 - 21,8 | f |
| 21,65 - 22,0 | f |
| 22,2 - 22,6 | f |
| 23,6 - 23,7 | f |
| 27,1 - 27,3 | f (faible) |
| 28,7 - 29,1 | f |
| 30,0 - 30,5 | f |
| 32,7 - 32,9 | f |
procédé caractérisé en ce que le mélange réactionnel terminé, en forme de gel, est refroidi à des températures inférieures à 5°C pendant une durée allant de 15 minutes à 24 heures, avant que le mélange réactionnel ne soit soumis, dans un récipient pouvant supporter une pression intérieure, à la cristallisation hydrothermale.

2. Procédé selon la revendication 1, caractérisé en ce qu'on utilise, comme composé du silicium, du gel de silice, un sol de silice, de l'acide silicique pyrogène ou un alcoolate de silicium, avantageusement Si (OC₂H₅)₄.

3. Procédé selon la revendication 1, caractérisé en ce qu'on utilise comme composé de l'aluminium de la pseudoböhmite ou de l'isopropylate d'aluminium ou un autre oxyde hydraté de l'aluminium.

4. Procédé selon la revendication 1, caractérisé en ce qu'on utilise comme composé du phosphore H₃PO₄, H₄P₂O₇, NH₄H₂PO₄ ou (NH₄)₂HPO₄.

5. Procédé selon la revendication 1, caractérisé en ce que le rapport moléculaire SiO₂/Al₂O₃ vaut dans le mélange réactionnel 0 à 5.

6. Procédé selon la revendication 1, caractérisé en ce que le rapport moléculaire P₂O₅/Al₂O₃ vaut dans le mélange 0,8 à 2,6.

7. Procédé selon la revendication 1, caractérisé en ce que le rapport moléculaire du composé à rôle de direction ou de gabarit de formation de la structure, par rapport à Al₂O₃ présent dans le mélange réactionnel, vaut 1,0 à 5,0 et/ou vaut 2 à 30 % par rapport à la fraction solide introduite.

8. Procédé selon l'une des revendications 1 à 7, caractérisé en ce que la substance à rôle de direction ou de gabarit de la formation de la structure est un produit cristallin, qui, dans un spectre de diffraction des rayons X, contient au moins les raies de réflexion indiquées à la revendication 1.

9. Procédé selon la revendication 1 à 7, caractérisé en ce que 1e rapport molaire H₂O/Al₂O₃ vaut dans le mélange réactionnel 30 à 500.
